# EUROPEAN PATENT SPECIFICATION

(11) **EP 1 280 443 B1**
(45) Date of publication and mention of the grant of the patent: **27.02.2008**
(21) Application number: 01927159.2
(22) Date of filing: 18.04.2001
(51) Int. Cl.: A47J 27/00, A47J 37/00, G01K 1/02, G01K 1/14, G01K 7/08, A47J 45/06, A47J 45/07, A47J 37/12, A47J 37/10

(54) **ELECTRONIC FRYING PAN SYSTEMS AND METHODS**
ELEKTRONISCHE BRATPFANNE UND METHODE
PROCEDE ET SYSTEME DE POELE A FRIRE ELECTRONIQUE

(30) Priority: 19.04.2000 US 197756 P; 11.05.2000 US 203293 P; 05.01.2001 US 260038 P
(43) Date of publication of application: 05.02.2003
(73) Proprietor: Digital Cookware, Inc., Oakbrook Terrace, IL 60181 (US)
(72) Inventor: SHARPE, Richard, Woodbridge, IL 60157 (US)
(74) Representative: Kudlek, Franz Thomas
(86) International application number: PCT/US2001/012582
(87) International publication number: WO 2001/080697

(56) References cited:
- EP-A- 0 931 495
- DE-A- 4 439 096
- US-A- 2 744 995
- US-A- 2 750 916
- US-A- 3 405 678
- US-A- 5 102 674
- US-A- 5 934 181

## Description

### Related Applications

This application claims priority to U. S. Provisional Application No. 60/197,756, filed April 19, 2000, to U. S. Provisional Application No. 60/203,293, filed May 11,2000, to U. S. Provisional Application No. 60/212,169, filed June 16, 2000, and to U. S. Provisional No. 60/260,038, filed January 5,2001.

### Background

Cooking over stove and fire has been an age-old occurrence. Assistance in cooking is desirable, such as to assure food temperature and doneness.

EP-A-0 931 495 discloses an electronic frying pan system comprising a pan for cooking food, a handle connected to the pan for manipulating the pan, one or more temperature sensors connected with the pan for generating signals indicative of one or more pan characteristics and indication electronics connected with the sensors and disposed with the handle for providing at least one indication of the pan characteristics to the user of the pan.

Further, US 5,102,674 discloses a process to control and regulate the temperature of a cooking medium in a deep fat fryer having a receptacle used for batch frying of food. This device does not monitor the temperature of the food, but rather the temperature of the cooking medium, such as cooking oil.

These cooking utensils known from the prior art provide no assistance in monitoring food temperature or doneness.

One object of the invention is to provide an electronic frying pan to overcome the deficiencies of the prior art. Other objects will be apparent in the description that follows.

### Summary of the Invention

The invention achieve this object by providing an electronic frying pan system with the features of claim 1 and a method of cooking in a frying pan with the features of claim 16.

The thermally conductive pan has one or more sensors attached therewith (e.g. inside or outside) to generate signal indicative of one or more characteristics (e.g. temperature) of the pan or food within the pan.

A handle has electronics connected to the sensors for providing indications to a user of the frying pan regarding food cooked within the pan. Preferably, the handle electronics may be removed from the handle and later replaced, so as to wash the pan without exposing the handle electronics to washing and environments.

The handle electronics preferably have a display to show desired information, e.g. food temperature to the user. Preferably, a process or is included with the handle electronics to process signals from the sensors to provide food characteristics, e.g. doneness.

Sensitive electronics are preferably included within the handle electronics, and the handle electronics are preferably thermally shielded from frying temperatures in the pan, so as to protect electronic components. User inputs to the processor (i.e., via the handle electronics) provide for selecting doneness (e.g., "well-done") and food type (e.g., meat, poultry, eggs) options.

In one aspect, the invention includes a digital frying pan, sensor electronics and a LCD display. The sensor electronics convert an analog sensor signal (for example, indicating pan temperature) into a digital signal for display at the LCD display of temperature in either Fahrenheit or Centigrade. A user of the digital frying pan preferably reads the display when facing the handle, and thus the display is preferentially oriented for this view. The information displayed preferably changes as pan or food temperature changes. In addition the display also preferably provides an analog representation of temperature, such as a bar graph. In one aspect, at least part of the sensor electronics are contained within removeable module, such that the module may be removed during washing of the digital frying pan so as not to damage sensitive electronics. In another aspect, the LCD display is also incorporated into the removeable module.

In yet another aspect, the invention provides a remote food doneness system. The system couples with a wall or other surface and has a line of sight to cooking food such as within a frying pan. The system includes optics and one or more thermal sensing detectors; the optics image the cooking food to the thermal sensing detectors; and processing electronics within the remote food doneness system process signals from the detectors to determine food characteristics, e.g., temperature. In one embodiment, a processor and memory within the remote food doneness system stores information such as food items (e.g., eggs, chicken, beef) and corresponding food doneness and temperature settings. A user interface permits a user of the system to select food doneness options. The system preferably includes an audible or visual indicator to warn of programmed events, e.g., when food viewed by the system has reached desired temperatures or doneness. The system in one embodiment, for example, may thus "view" cooking eggs and warn a user desiring the eggs that the eggs are "over easy".

In one aspect, an electronic frying pan system is provided. The system includes a pan for cooking food and a handle connected to the pan for manipulating the pan. One or more temperature sensors connect with the pan to generate signals indicative of one or more characteristics of the pan, such as temperature. Indication electronics disposed with the handle connect with the sensors and disposed to provide at least one indication of the characteristics to a user of the pan.

In one aspect, the indication electronics includes a liquid crystal display to display the one or more characteristics to the user. By way of example, pan temperature is relayed to the user. Pan temperature of one aspect is calibrated to a food temperature as the food is generally not directly adjacent to a temperature sensor.

In one aspect, the indication electronics include a processor to process the signals to associate food characteristics corresponding to food cooking within the pan. Food characteristics can include food doneness.

In another aspect, a user interface is included with the frying pan to provide for selecting one of several food types, such that the processor generates food characteristics as a function of food type. Similarly, food temperatures may be selected in another aspect.

In a preferred aspect, the indication electronics are detachable and alternatively attachable with the handle, such that the pan may be washed without the indication electronics.

In still another aspect, the indication electronics have voice synthesis electronics to speak at least the one indication to the user.

Preferably, the indication electronics include a memory element for storing food doneness versus temperature settings for one or more food types.

In yet another aspect, an audible alarm is coupled with the indication electronics to audibly inform a user of the pan system of one of temperature and food doneness of food within the pan.

In one aspect, the indication electronics include a calibration memory to couple the indication electronics with a plurality of different size pans, such that the indication electronics provide calibrated information for the different size pans.

The invention of another aspect provides a method of cooking food in a frying pan, including the steps of: sensing temperature of the frying pan, processing pan temperature to determine one or more of food doneness and food temperature, and informing a user of the pan of the food doneness and/or food temperature.

The method can also include the steps of decoupling processing electronics from the frying pan prior to washing the pan and alternatively coupling the processing electronics with the frying pan prior to use.

The method can also include the steps of decoupling processing electronics from the frying pan and coupling the processing electronics with a second pan having a different size from the frying pan, and selecting calibration data within the processing electronics to provide calibrated information for the different size second pan.

In another aspect, the invention provides a method of remotely monitoring temperature of food, including the steps of: imaging the food onto a thermal sensor, processing signals from the thermal sensor to determine a temperature of the food, and informing the user of the temperature.

The method of this aspect preferably includes the step of attaching a housing coupled with the sensor to a surface in line of sight from the food.

In yet another aspect, the method includes the further step of imaging the food onto a CCD to display an image of the food to the user so as to physically arrange appropriate mounting of the housing to image the food onto the thermal sensor.

The invention of one aspect calibrates a thermal sensor arranged to sense temperature at the side of the pan. Since the side of the pan generally has a different temperature than the center of the pan, where food cooks, the invention calibrates the temperature taken at the side of the pan to correlate to the center of the pan. Software with the electronics module provides smoothing of the data based on rate of change of temperature at the side of the pan. This provides an average rate of change usable to compensate for temperatures in the pan center.

The invention is next described further in connection with preferred embodiments, and it will become apparent that various additions, subtractions, and modifications can be made by those skilled in the art without departing from the scope of the invention.

### Brief Description of Illustrated Embodiments

A more complete understanding of the invention may be obtained by reference to the drawings, in which:
FIG. 1 shows one electronic frying pan constructed according to the invention;
FIG. 2 shows a partial cross-sectional view of the handle and pan of FIG. 1;
FIG. 3 shows one block diagram of circuitry suitable for use with an electronic pan of FIG. 2;
FIG. 4 shows one electronics handle of the invention; FIG. 4A shows an end view of the handle of FIG. 4; FIG. 4B shows a cross-sectional side view of the handle of FIG. 4;
FIG. 5 shows one remote food doneness system constructed according to the invention; and
FIG. 6 schematically shows an electronic block diagram of the system of FIG. 5.

### Detailed Description of the Preferred Embodiment

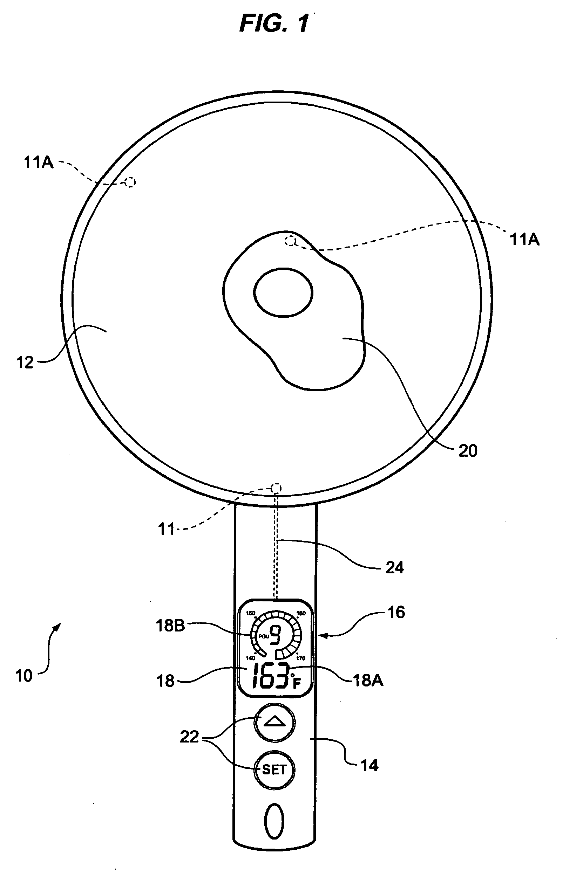

FIG. 1 shows an electronic frying pan 10 constructed according to the invention with (a) a thermally conductive pan 12 and (b) a handle 14. One or more temperature sensors 11 coupled with pan 12 connect to an electronics module 16 in handle 14. Electronics module 16 preferably includes display 18 to show a user of pan 10 characteristics associated with pan 12 or food (in the form of an egg) 20 within pan 12. Electronics module 16 includes a processor such as a microprocessor and preferably includes memory to store food doneness options and user selections. A user interface 22 provides for user input to select various characteristics and functions of electronics module 16. Display 18 may show digital temperature 18a, a bar graph representation 18b of temperature or doneness, or other information. As described below, electronics module 16 preferably detaches from pan 10 so that pan 10 is washable without module 16 attached thereto. Teflon wires preferably seal the remaining portions of handle 14 to prevent liquids from entering electronics remaining after removal of module 16.

Temperature sensors 11 include, for example, a thermistor or thermocouple. Thermocouple 11 couples to electronics module 16 via electronic or thermal conductive path 24; path 24 is chosen as a matter of design choice as a medium to transfer data or signals from sensor 11 to module 16. Preferably, stainless steel is used to provide contact between module 16, path 24 and sensors 11. FIG. 1 shows one temperature thermocouple 11 coupled with conductive pan 12, though additional sensors 11 may be placed about pan 12 as a matter of design choice. For example, one or more additional temperature sensors may be placed at different locations 11a; sensors at locations 11a also connect to module 16 and may provide more representative temperature data for food 20. Any temperature sensor 11 may be calibrated to correspond to a temperature profile experienced by food 20, even though sensor 11 is not directly adjacent food 20. Typical pan calibrations are for pans that are eight, ten or twelve inches in diameter.

In operation, a user of pan 10 selects pre-programmed temperature settings or programs personal settings to cook food 20 in a desired manner. For example, such a user may select 300 degrees F for eggs, 340 degrees F for bacon, 360 degrees F for burgers and pork chops, 380 degrees F for pancakes, and 400-420 degrees F for steak. Other options are of course available without departing from the scope of the invention. In the preferred embodiment, display 18 displays the temperature of pan 12 in Centigrade or Fahrenheit. Various cooking levels are preferably selectable at handle 14. When a cooking level is selected, a microprocessor in module 16 provides a signal converted to display 18 that informs the user that the temperature is at his desired chosen cooking level.

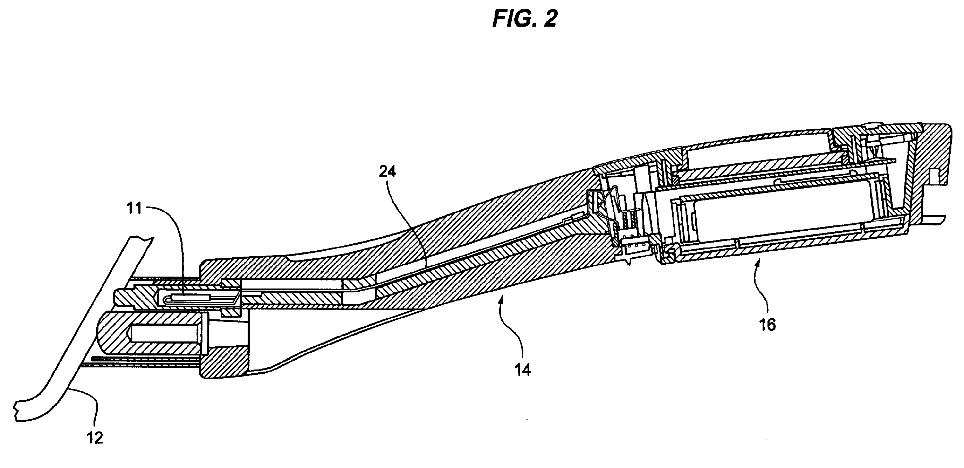

FIG. 2 shows a partial cross-sectional view of pan 10 of FIG. 1. Those skilled in the art should appreciate that the mechanical design of pan 10 is a matter of design choice and that other configurations may be functionally arranged without departing from the scope of the invention.

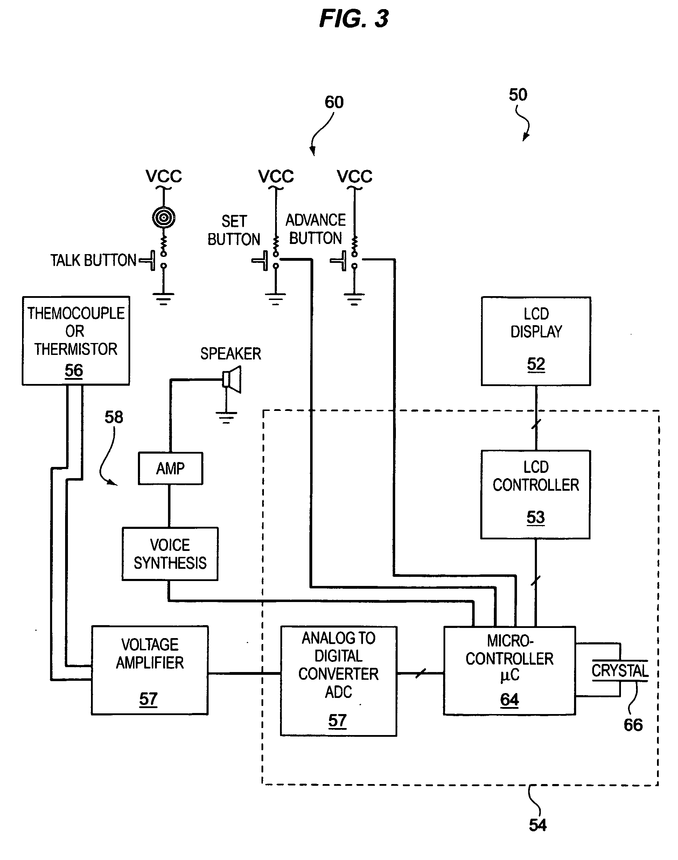

FIG. 3 schematically illustrates circuitry 50 suitable for use with frying pan 10 of FIG. 1. An LCD display 52 may for example be used as display 18; an LCD controller 53 generally controls display 52 as known in the art. Dotted line 54 indicates one practical partitioning of components of circuitry 50 that may be conveniently contained within one package. A thermocouple or thermistor 56 may serve in function as one of the sensors 11 to generate signals concerning characteristics of the pan and/or food within pan 12. A voltage amplifier 57 may be used to boost sensor signals, as desired or needed. An A-D converter 59 is generally used when sensor 56 drives an analog signal. In one embodiment, the handle electronics module can include voice synthesis electronics 58 used to capture human voice commands for pan or food characteristics made by a user of pan 10. Normally, however, users input instructions to circuitry 50 via input buttons 60 (e.g., for user interface buttons 22, FIG. 1) so as to select desired food or doneness characteristics. A microcontroller 64 provides for overall function and command intelligence of circuitry 50; for example microcontroller 64 adjusts cooking time based on surface temperature of pan 12, FIG. 1. A crystal 66 provides for timing in circuitry 50.

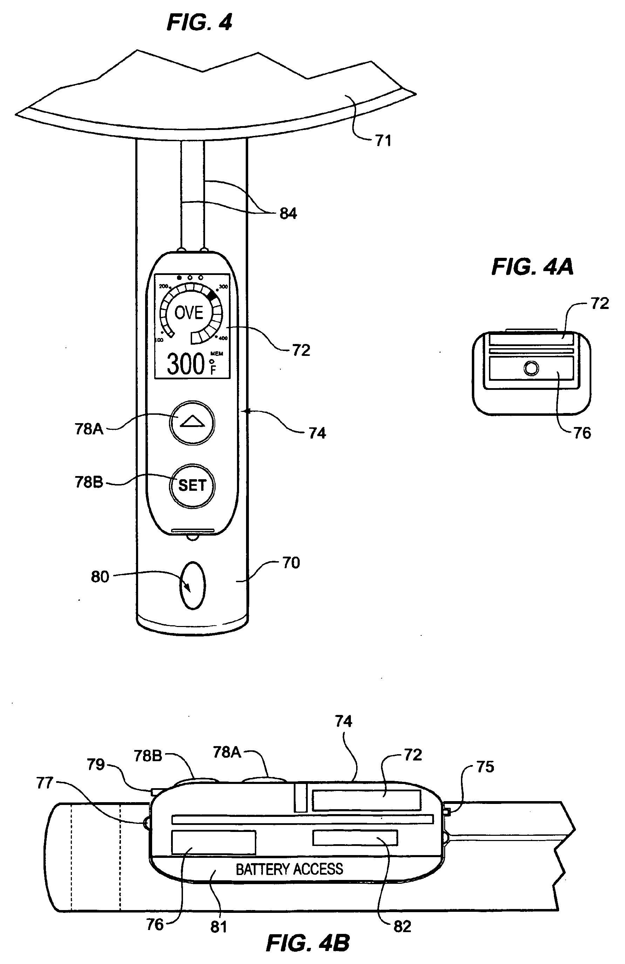

FIGs. 4, 4A, 4B show one handle 70 constructed according to the invention and suitable for use an electronic frying pan 71 (shown only partially, for purposes of illustratinon) such as pan 10, FIG. 1. A display 72 shows food or pan characteristics. Preferably the handle electronics are in the form of a removable control module 74, as shown; a module alignment nub 75, ball snap 77, and lip 79 may be used to facilitate removing from, and alternatively replacing module 74 within, handle 70. A battery 76, e.g., a 2450 Lithium battery, fits within handle 74; battery 76 may be removed from module 74 via access door 81. User interface buttons 78a, 78b provide for "advance" and "set" menu options, respectively. A hang hole 80 permits hanging of handle 70 on a hook. A warning buzzer 82 provides an audible warning of programmed food doneness sensed by temperature sensors coupled with module 74 via communications lines 84.

The invention thus provides several advantages. By way of example, eggs are one food difficult to cook with certainty as to whether they are well done, over easy or medium. The invention provides for recalling temperature for desired egg doneness; and a user need not rely on stove temperature settings. The microcontroller of the preferred embodiment automatically signals the user (e.g., via buzzer 82, FIG. 4) when the desired egg doneness is reached. Since the display can include an analog representation of doneness, e.g., via a bar graph or tachagraphic display, then the user may also watch food approach the desired doneness, so as not to be surprised. User selections at the user interface (e.g., by pressing button 22, FIG. 1) provide for selecting doneness options (e.g., over easy) and food types (e.g., eggs); or a user can select custom temperatures. In a further advantage, the replaceable module (e.g., module 16, FIG. 1) may be used in an array of pans of different size - but with a common electronics module. When the module is coupled with a certain pan size, the user preferably sets pan size through the same user interface so as to adjust any calibrations to temperature sensors with the particular pan.

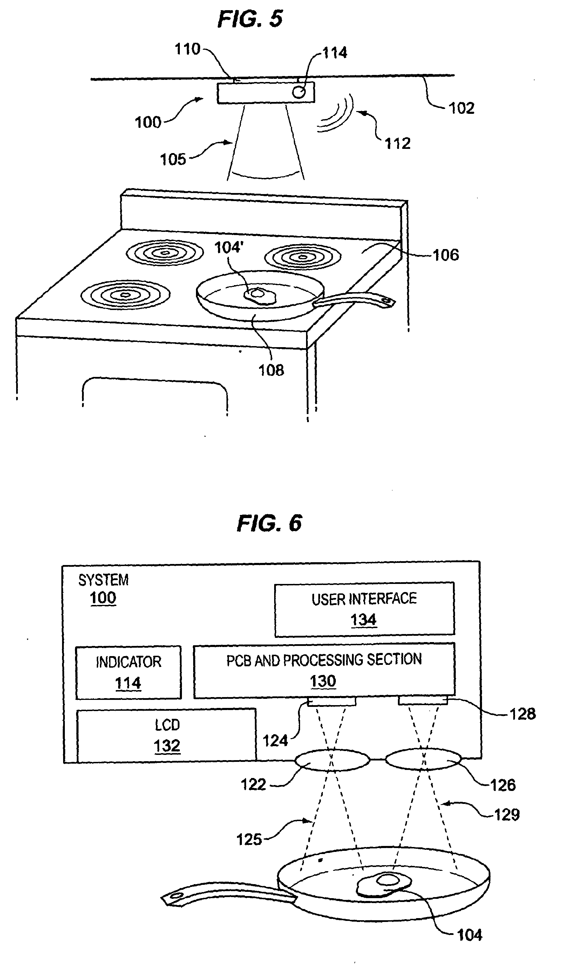

FIG. 5 shows a remote food doneness system 100 constructed according to the invention. System 100 is constructed and arranged to attach to surfaces 102 near to cooking food 104, such as food on stove 106 and within frying pan 108. By way of example, system 100 attaches to surface 102 via magnets 110 coupled with system 100; surfaces 102 are typically metallic surfaces that are part of stove 106. In operation, system 100 views food 104 through a field of view 105; system 100 then monitors food doneness and/or temperature of food 104 to provide an indication 112 of doneness and/or temperature to a user. Typically, indication 112 is an audible sound or light made, respectively, from a speaker or LED 114. System 100 thus provides operation similar to the digital frying pans of FIGs. 1-4; however system 100 functions remotely from food 104.

FIG. 6 shows a block schematic of system 100; those skilled in the art should appreciate that elements of system 100, as shown in FIG. 6, may be arranged in different ways, or through different components, without departing from the scope of the invention. An infrared optically powered element (e.g., a mirror or Germanium lens) 122 images food 104 onto a thermal detector 124 (e.g., a bolometer), as shown by optical imaging lines 125. A visible optically powered element (e.g., a quartz lens) 126 images food 104 onto a CCD array 128, as shown by optical imaging lines 129. A PCB and processing section 130 converts signals from CCD array 128 to data for LCD 130; PCB and processing section 130 converts signals from thermal detector 124 to temperature data indicating a temperature of food 104; a user may view LCD 132 to view what food 104 system 100 monitors; specifically, by reviewing LCD 132 a user may position system 100 appropriately on surface 102 so as to appropriately image food 104 to thermal detector 124. A user interface provides for inputting selections for temperature and food doneness to system 100; preferably PCB and processing section 130 includes memory to store food doneness options and food types, similar to system described above in FIGs. 1-4. Once a selected temperature or food doneness is reached, for food 104, system 100 informs the user of this through indicator 114 (e.g., a buzzer or LED). In this way, a user of system 100 can monitor food doneness and temperature for a food remotely and conveniently. As those skilled in the art understand, determining temperature of food 104 via thermal detectors works best when a reference temperature is available; thus preferably thermal detector 124 includes at least two detectors, one to receive thermal energy from food 104 and one to receive thermal energy from a reference temperature such as the inside of system 100, which is generally at room temperature. Data from the two detectors 124 may then be compared (in PCB and processing section 130) to determine temperature of food 104. Other calibration techniques for determining absolute temperature may also be used.

Those skilled in the art should appreciate that system 100 can utilize a single infrared CCD to provide both imaging for LCD display 130 and temperature monitoring of food 104. In such an embodiment, separate lens 126 and CCD array 128 are not necessary.

The invention thus attains the objects set forth above, among those apparent from the preceding description. Certain changes may be made in the above methods and systems without departing from the scope of the appended claims.

## Claims

1. An electronic frying pan system, comprising:
a pan (10, 12, 71) for cooking food;
a handle (14, 70) connected to the pan for manipulating the pan;
one or more temperature sensors (11, 56) connected with the pan for generating signals indicative of one or more pan characteristics; and
indication electronics (18, 54) connected with the sensors and disposed with the handle for providing at least one indication of the pan characteristics to a user of the pan, **characterised in that** the indication electronics (18, 54) comprise a processor (64) for processing the signals to associate food characteristics corresponding to food cooking within the pan, and **in that**
the indication electronics (16, 18, 54) comprise a user interface (22, 60) for selecting one of several food characteristics.

2. A pan system according to claim 1, wherein the indication electronics comprise a liquid crystal display (52) for displaying the one or more pan characteristics to the user.

3. A pan system according to claim 1 or 2, wherein the one or more pan characteristics comprise pan temperature.

4. A pan system according to any one of the preceding claims, wherein the food characteristics comprise food doneness or food temperature.

5. A pan system according to any one of the preceding claims, wherein the user interface facilitates selection of one of several food types, wherein the processor generates food characteristics as a function of food type.

6. A pan system according to any one of the preceding claims, wherein the indication electronics (16, 18, 54) comprise memory for storing food doneness as a function of food temperature for one or more food types.

7. A pan system according to any one of the preceding claims, further comprising an audible alarm (82) coupled with the indication electronics for audibly informing a user of the pan system of one of food temperature and food doneness of food within the pan.

8. A pan system according to any one of the preceding claims,
wherein the indication electronics (18, 54) comprise calibration memory for coupling the indication electronics with a plurality of different size pans, wherein the indication electronics provide for the different size pans a temperature profile of a pan corresponding to a measured pan temperature.

9. A pan system according to any one of the preceding claims, wherein
the processor (64, 130) adjusts the pan characteristic to achieve the selected food characteristic.

10. A pan system according to claim 9, the processor (64, 130) being calibrated for a temperature profile experienced by food cooking in the pan.

11. A pan system according to any of the preceding claims, wherein
the processor (64) is connected to the sensor (11, 56) for processing the signal to calculate a measured pan temperature, the processor being calibrated for a location of the sensor and for a pan size.

12. A system according to claim 11 wherein the sensor (11, 56) is located proximate to an edge of the pan and the processor (64) can be calibrated by a user.

13. A pan system according to any of the preceding claims, wherein the processor (64) generates food characteristics as a function of food temperature.

14. A pan system according to any of the preceding claims, wherein the user interface (22, 60) allows for selecting and for displaying at least one of a selected food and a selected pan temperature, and for displaying the measured pan temperature.

15. A pan system according to any of the preceding claims, further comprising
a removable module (16), the removable module comprising the processor (64) and the user interface (22, 60) and being disposed within the handle (14, 70), the module being removable from the handle by a user.

16. Method of cooking in a frying pan, comprising the steps of
sensing temperature of the frying pan by means of one or more temperature sensors (11, 56) connected with the pan for generating signals indicative of one or more pan characteristics; and
providing at least one indication of the pan characteristics to a user of the pan by means of indication electronics (18, 54) connected with the sensors,
**characterised by** the steps of
processing the signals to associate food characteristics corresponding to food cooking within the pan by means of a processor (64) included in the indication electronics (18, 54), and
selecting one of several food characteristics by means of a user interface (22, 60) included in the indication electronics.

## Patentansprüche

1. Elektronisches Bratpfannensystem, mit:
einer Pfanne (10, 12, 71) zum Bereiten von Speisen bzw. Lebensmitteln;
einem Griff (14, 70), der zur Bewegung bzw. Manipulation der Pfanne mit der Pfanne verbunden ist;
einem oder mehreren Temperatursensoren (11, 56), die mit der Pfanne verbunden sind, um Signale zu erzeugen, die eine Pfannencharakteristik bzw. mehrere Pfannencharakteristika angeben; und
einer Anzeigeelektronik (18, 54), die mit den Sensoren verbunden ist und in bzw. mit dem Griff vorgesehen ist, um wenigstens eine Angabe bzw. Anzeige der Pfannencharakteristika einem Benutzer der Pfanne zur Verfügung zu stellen,
**dadurch gekennzeichnet, dass** die Anzeigeelektronik (18, 54) einen Prozessor (64) aufweist, um die Signale zu verarbeiten, um Speisencharakteristika, welche Speisen entsprechen, die in der Pfanne bereitet werden, zu assoziieren, und dass
die Anzeigeelektronik (16, 18, 54) eine Benutzerschnittstelle (22, 60) zum Auswählen einer von mehreren Speisencharakteristika umfasst.

2. Pfannensystem nach Anspruch 1, bei dem die Anzeigeelektronik eine Flüssigkristallanzeige (52) aufweist, um die eine oder die mehreren Pfannencharakteristika dem Benutzer anzuzeigen.

3. Pfannensystem nach einem der Ansprüche 1 oder 2, bei dem die eine oder mehreren Pfannencharakteristika die Pfannentemperatur umfassen.

4. Pfannensystem nach einem der vorstehenden Ansprüche, bei dem die Speisencharakteristika den Garzustand bzw. Garheitszustand oder die Temperatur der Speise bzw. Speisen umfassen.

5. Pfannensystem nach einem der vorstehenden Ansprüche, bei dem die Benutzerschnittstelle die Auswahl von einer von mehreren Speisenarten erleichtert, wobei der Prozessor Speisencharakteristika als Funktion der Speisenart erzeugt.

6. Pfannensystem nach einem der vorstehenden Ansprüche, bei dem die Anzeigeelektronik (16, 18, 54) einen Speicher aufweist, um den Garheitszustand der Speise bzw. Speisen als Funktion einer Speisentemperatur für eine oder mehrere Speisenarten aufweist.

7. Pfannensystem nach einem der vorstehenden Ansprüche, ferner mit einem hörbaren Alarm (82), der mit der Anzeigeelektronik verbunden ist, um einen Benutzer des Pfannensystems hörbar bezüglich der Speisentemperatur und/oder des Speisengarheitszustands von Speisen in der Pfanne zu informieren.

8. Pfannensystem nach einem der vorstehenden Ansprüche, bei dem die Anzeigeelektronik (18, 54) einen Kalibrierungsspeicher zum Koppeln der Anzeigeelektronik mit einer Anzahl von Pfannen unterschiedlicher Größe aufweist, wobei die Anzeigeelektronik für die Pfannen verschiedener Größe ein Temperaturprofil einer Pfanne, die einer gemessenen Pfannentemperatur entspricht, bereitstellt.

9. Pfannensystem nach einem der vorstehenden Ansprüche, bei dem der Prozessor (64, 130) die Pfannencharakteristik zur Schaffung der ausgewählten Speisencharakteristik einstellt.

10. Pfannensystem nach Anspruch 9, wobei der Prozessor (64, 130) kalibriert ist bzw. wird für ein Temperaturprofil, welches von einer in der Pfanne zubereiteten Speise erfahren wird.

11. Pfannesystem nach einem der vorstehenden Ansprüche, bei dem der Prozessor (64) mit dem Sensor (11, 56) verbunden ist, um das Signal zu verarbeiten, um eine gemessene Pfannentemperatur zu berechnen, wobei der Prozessor für eine Plazierung auf dem Sensor und für eine Pfannengröße kalibriert ist.

12. System nach Anspruch 11, bei dem der Sensor (11, 56) in der Nähe eines Randes bzw. einer Kante der Pfanne angeordnet ist, und der Prozessor (64) durch einen Benutzer kalibriert werden kann.

13. Pfannensystem nach einem der vorstehenden Ansprüche, bei dem der Prozessor (64) Speisencharakteristika als eine Funktion der Speisentemperatur erzeugt.

14. Pfannensystem nach einem der vorstehenden Ansprüche, bei dem die Benutzerschnittstelle (22, 60) die Auswahl und die Anzeige wenigstens einer ausgewählten Speise und/oder einer ausgewählten Pfannentemperatur, sowie die Anzeige der gemessenen Pfannentemperatur gestattet.

15. Pfannensystem nach einem der vorstehenden Ansprüche, ferner mit einem entfernbaren Modul (16), wobei das entfernbare Modul den Prozessor (64) und die Benutzerschnittstelle (22, 60) aufweist, und innerhalb des Griffes (14, 70) angeordnet bzw. vorgesehen ist, wobei das Modul durch einen Benutzer von dem Griff entfernt werden kann.

16. Verfahren zum Kochen bzw. Speisenzubereiten in einer Bratpfanne, mit folgenden Schritten:
Erfassen bzw. Sensieren einer Temperatur der Bratpfanne mittels eines Temperatursensors oder mehrerer Temperatursensoren (11, 56), die mit der Pfanne verbunden sind, um Signale zu erzeugen, die eine Pfannencharakteristik oder mehrere Pfannencharakteristika angeben; und
Bereitstellung wenigstens einer Anzeige der Pfannencharakteristika für einen Benutzer der Pfanne mittels einer Anzeigeelektronik (18, 54), die mit den Sensoren verbunden ist, **gekennzeichnet durch** die Schritte des Verarbeitens der Signale zur Assoziierung von Speisencharakteristika, die in der Pfanne zubereiteten Speisen entsprechen, mittels eines Prozessors (64), der in der Anzeigeelektronik (18, 54) vorgesehen ist, und des Auswählens einer Speisencharakteristik oder mehrerer Speisencharakteristika mittels einer Benutzerschnittstelle (22, 60), die in der Anzeigeelektronik enthalten ist.

## Revendications

1. Système de poêle à frire électronique, comportant :
une poêle (10, 12, 71) pour cuire un aliment ;
une poignée (14, 70) reliée à la poêle pour manipuler la poêle ;
un ou plusieurs capteurs de température (11, 56) reliés à la poêle pour produire des signaux indicatifs d'une ou plusieurs caractéristiques de poêle ; et
une électronique d'indication (18, 54) reliée aux capteurs et disposée avec la poignée pour fournir au moins une indication des caractéristiques de poêle à un utilisateur de la poêle,
**caractérisé en ce que** l'électronique d'indication (18, 54) comporte un processeur (64) pour traiter les signaux pour associer des caractéristiques d'aliment correspondant à un aliment cuisant dans la poêle, et **en ce que**
l'électronique d'indication (16, 18, 54) comporte une interface utilisateur (22, 60) pour sélectionner une parmi plusieurs caractéristiques d'aliment.

2. Système de poêle selon la revendication 1, dans lequel l'électronique d'indication comporte un affichage à cristaux liquides (52) pour afficher la ou les caractéristiques de poêle à l'utilisateur.

3. Système de poêle selon la revendication 1 ou 2, dans lequel la ou les caractéristiques de poêle comportent une température de poêle.

4. Système de poêle selon l'une quelconque des revendications précédentes, dans lequel les caractéristiques d'aliment comportent une cuisson d'aliment ou une température d'aliment.

5. Système de poêle selon l'une quelconque des revendications précédentes, dans lequel l'interface utilisateur facilite la sélection d'un parmi plusieurs types d'aliment,
dans lequel le processeur génère des caractéristiques d'aliment en fonction d'un type d'aliment.

6. Système de poêle selon l'une quelconque des revendications précédentes, dans lequel l'électronique d'indication (16, 18, 54) comporte une mémoire pour mémoriser une cuisson d'aliment en fonction d'une température d'aliment pour un ou plusieurs types d'aliment.

7. Système de poêle selon l'une quelconque des revendications précédentes, comportant également une alarme sonore (82) couplée à l'électronique d'indication pour informer de manière sonore un utilisateur du système de poêle, d'une caractéristique parmi une température d'aliment et une cuisson d'aliment d'un aliment dans la poêle.

8. Système de poêle selon l'une quelconque des revendications précédentes,
dans lequel l'électronique d'indication (18, 54) comporte une mémoire de calibrage pour coupler l'électronique d'indication à une pluralité de poêles de différente taille, dans lequel l'électronique d'indication fournit pour les poêles de différente taille, un profil de température d'une poêle correspondant à une température de poêle mesurée.

9. Système de poêle selon l'une quelconque des revendications précédentes, dans lequel
le processeur (64, 130) ajuste la caractéristique de poêle pour obtenir la caractéristique d'aliment sélectionnée.

10. Système de poêle selon la revendication 9, le processeur (64, 130) étant calibré pour un profil de température rencontré par l'aliment cuisant dans la poêle.

11. Système de poêle selon l'une quelconque des revendications précédentes, dans lequel
le processeur (64) est relié au capteur (11, 56) pour traiter le signal pour calculer une température de poêle mesurée, le processeur étant calibré pour un emplacement du capteur et pour une taille de poêle.

12. Système de poêle selon la revendication 11, dans lequel le capteur (11, 56) est positionné à proximité d'un bord de la poêle et le processeur (64) peut être calibré par un utilisateur.

13. Système de poêle selon l'une quelconque des revendications précédentes, dans lequel le processeur (64) génère des caractéristiques d'aliment en fonction d'une température d'aliment.

14. Système de poêle selon l'une quelconque des revendications précédentes, dans lequel l'interface utilisateur (22, 60) permet de sélectionner et d'afficher au moins un élément parmi un aliment sélectionné et une température de poêle sélectionnée, et d'afficher la température de poêle mesurée.

15. Système de poêle selon l'une quelconque des revendications précédentes, comportant également
un module amovible (16), le module amovible comportant le processeur (64) et l'interface utilisateur (22, 60) et étant disposé à l'intérieur de la poignée (14, 70), le module pouvant être enlevé de la poignée par un utilisateur.

16. Procédé de cuisson dans une poêle à frire, comportant les étapes consistant à
détecter une température de la poêle à frire au moyen d'un ou plusieurs capteurs de température (11, 56) reliés à la poêle pour produire des signaux indicatifs d'une ou plusieurs caractéristiques de poêle ; et
donner au moins une indication des caractéristiques de poêle à un utilisateur de la poêle au moyen d'une électronique d'indication (18, 54) reliée aux capteurs,
**caractérisé par** les étapes consistant à
traiter les signaux pour associer des caractéristiques d'aliment correspondant à un aliment cuisant dans la poêle au moyen d'un processeur (64) inclus dans l'électronique d'indication (18, 54), et
sélectionner une parmi plusieurs caractéristiques d'aliment au moyen d'une interface utilisateur (22, 60) incluse dans l'électronique d'indication.
